# FASCICULE DE BREVET EUROPEEN

(11) **EP 0 677 903 B1**
(45) Date de publication et mention de la délivrance du brevet: **02.09.1998**
(21) Numéro de dépôt: 95410019.4
(22) Date de dépôt: 23.03.1995
(51) Int. Cl.: H02B 1/32, H02B 1/42

(54) **Support de borniers permettant leur fixation dans un coffret électrique ou analogue**
Anschlussleistenträger in Schaltschrank oder dergleichen
Terminal blocks support for mounting in an electrical box or similar

(30) Priorité: 05.04.1994 FR 9404128
(43) Date de publication de la demande: 18.10.1995
(73) Titulaire: SCHNEIDER ELECTRIC SA, 92100 Boulogne Billancourt (FR)
(72) Inventeur: Pellicano, Joseph,, F-38050 Grenoble Cedex 09 (FR); Meignoz, Josiane,, F-38050 Grenoble Cedex 09 (FR)
(74) Mandataire: Hecké, Gérard

(56) Documents cités:
- EP-A- 0 382 650
- EP-A- 0 478 469
- FR-E- 75 433

## Description

La présente invention concerne un support de borniers permettant par exemple la fixation d'un ou de plusieurs borniers de distribution de la phase, du neutre ou de la terre dans des coffrets électriques.

On connaît des supports de borniers constitués d'une tringle comprenant une partie intermédiaire sur laquelle est fixé le bornier, ladite tringle comportant à ses deux extrémités opposées, respectivement deux pattes de fixation de la tringle sur deux surfaces d'appui appartenant à un coffret électrique dans lequel les borniers sont destinés à être fixés. Or, ce type de support présente un certain nombre d'inconvénients qui tiennent principalement en ce que, d'une part, les vis du bornier sont peu visibles et d'autre part, le serrage de ces vis est peu aisé compte tenu de l'effet "cardan" engendré sur le poignet lors de l'opération de vissage. En outre, dans le cas d'une superposition de tels supports dans le coffret électrique, l'accessibilité des têtes de vis des borniers inférieurs est réduite.

Un tel support de bornier selon l'art antérieur est par exemple décrit dans le document EP-A-0 478 469.

La présente invention résout ces inconvénients et propose un support de bornier de conception simple, augmentant la visibilité des têtes de vis des borniers tout en facilitant leur accès pour leur serrage et particulièrement lors de la superposition des boîtiers pour former des supports de borniers étagés.

A cet effet, la présente invention a pour objet un support de bornier permettant la fixation d'au moins un bornier dans un coffret électrique ou analogue, du genre constitué par au moins une tringle comprenant une partie intermédiaire sur laquelle est fixé le bornier et, à ses deux extrémités opposées, un moyen de fixation de la tringle sur respectivement deux surfaces d'appui appartenant au coffret, lesdites surfaces s'étendant sensiblement parallèlement à la direction longitudinale de la tringle, ce support étant caractérisé en ce que la partie intermédiaire précitée de la tringle s'étend suivant un plan incliné par rapport au plan des surfaces d'appui précitées et à une certaine distance de celui-ci, en étant reliée par ses deux extrémités opposées, respectivement à deux parties de raccordement respectivement reliées à deux pattes de fixation comportant les moyens de fixation précités.

On voit déjà que grâce à l'invention, l'opérateur peut aisément accéder aux vis du bornier, lequel est suffisamment visible, même lorsque le support est placé à la partie supérieure du coffret, d'où il résulte une grande facilité de manipulation.

Selon une réalisation particulière de l'invention, les parties de raccordement s'étendent suivant une direction inclinée par rapport au plan passant par les axes des moyens de fixation précités et perpendiculaire aux surfaces d'appui de façon que la partie intermédiaire de la tringle soit décalée latéralement par rapport à ce plan.

Avantageusement, la distance entre les deux plans perpendiculaires aux surfaces d'appui, l'un comprenant le bord interne de la partie intermédiaire précitée, et l'autre les bords dits intérieurs des pattes de fixation est environ égale à la moitié de la largeur de la tringle.

De préférence, la distance entre l'axe médian de la tringle et le plan des surfaces d'appui est comprise entre 10 et 40mm.

Avantageusement, l'angle d'inclinaison entre le plan des surfaces d'appui et la partie intermédiaire est compris entre 5 et 30°.

Selon une caractéristique particulière de l'invention, la partie intermédiaire, les parties de raccordement, et les pattes de fixation précitées sont réalisées par déformation d'une tringle plate.

Avantageusement, les moyens de fixation précités sont constitués par une lumière débouchante réalisée dans l'une des pattes précitées et une boutonnière ménagée dans l'autre des pattes de fixation précitées.

Ceci permet de placer les vis sur les plans d'appui, préalablement à la pose du support, ce qui augmente encore la commodité de l'opération de fixation du support.

L'invention a également pour objet un support comprenant deux tringles comportant les caractéristiques précédemment décrites, prises seules ou en combinaison, placées l'une au dessus de l'autre et en sens inverse, de façon à superposer leurs pattes de fixation deux à deux, et à former ainsi un support étagé. On voit que le décalage de la position des borniers par rapport à l'axe des moyens de fixation permet la réalisation d'un bornier étagé constitué de deux supports identiques.

Mais d'autres avantages de l'invention apparaîtront mieux dans la description qui suit, et se réfère aux dessins annexés donnés uniquement à titre d'exemple et dans lesquels :

La figure 1 est une vue en perspective d'un support de bornier conforme à l'invention.

La figure 2 est une vue similaire à la précédente, mais illustrant un support sur lequel un bornier a été fixé.

La figure 3 est une vue en perspective illustrant un support de bornier étagé.

La figure 4 est une vue en plan de la figure précédente.

La figure 5 est une vue de gauche de la figure précédente.

La figure 5a est une vue partielle de dessus de la figure 4.

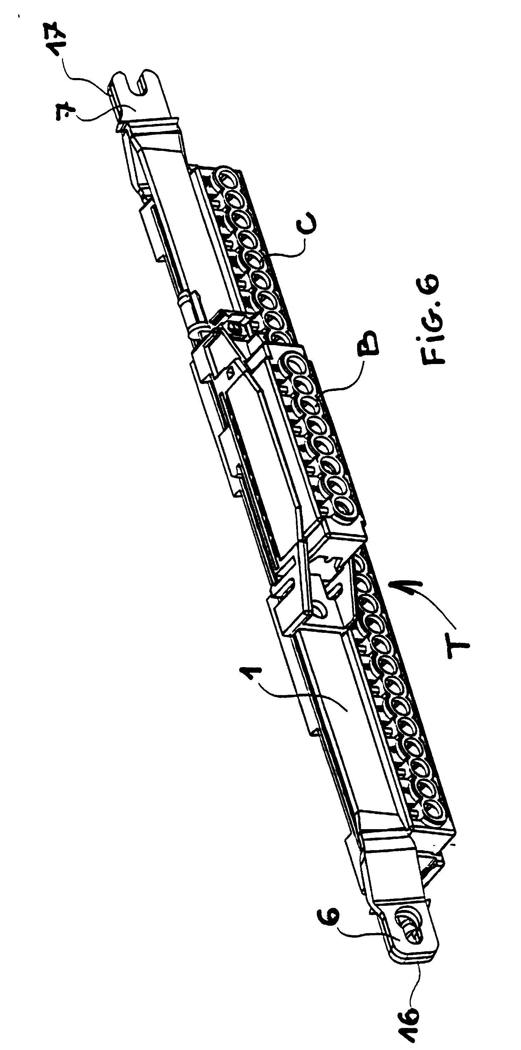

La figure 6 est une vue en perspective illustrant un support de bornier étagé sur lequel ont été fixés deux borniers de tailles différentes.

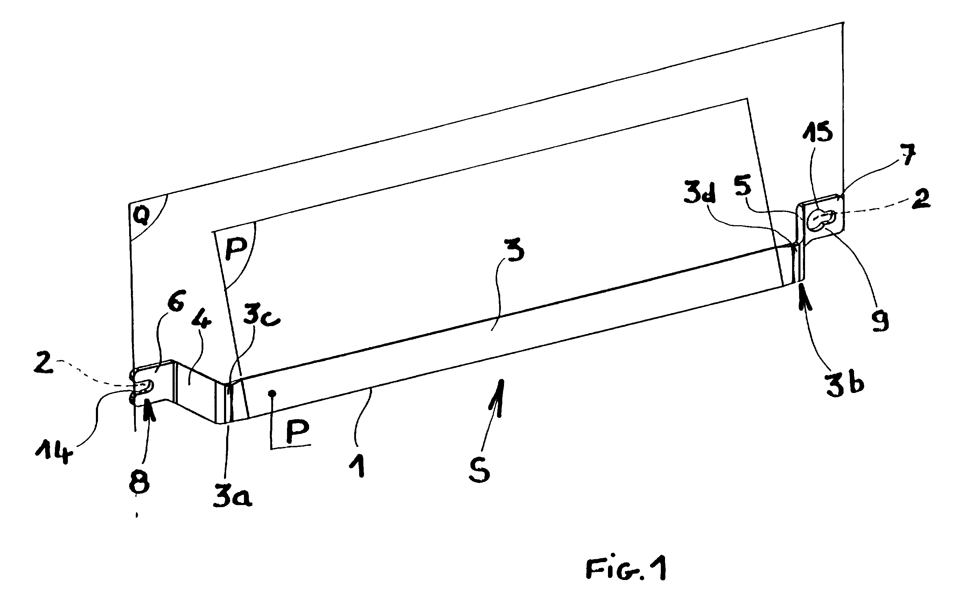

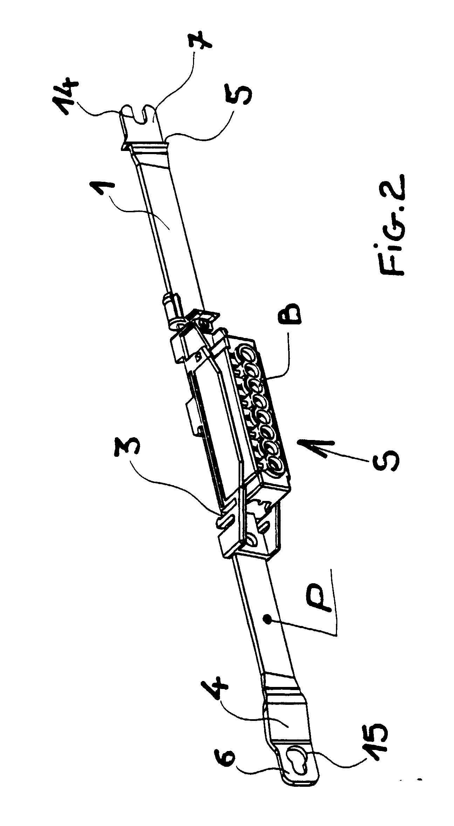

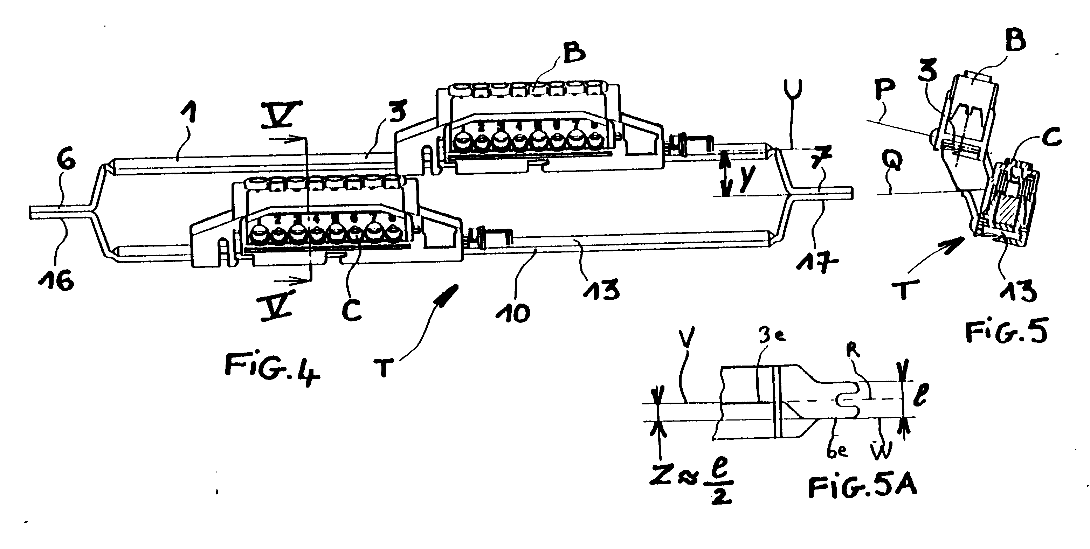

Sur les figures 1 et 2, on voit un support S de bornier B conforme à l'invention destiné à être fixé dans un coffret électrique (non représenté), et constitué par une tringle unique 1 réalisée en tôle et pliée de manière à lui conférer une forme particulière. Dans cette forme particulière, cette tringle 1 comprend une partie intermédiaire 3 sur laquelle un bornier B est destiné à être fixé (tel que représenté sur la figure 2), reliée par ses deux extrémités opposées (3a, 3b), par une partie repliée (3c, 3d), à deux parties de raccordement 4, 5, s'étendant suivant un plan incliné par rapport au plan de la partie intermédiaire 3. Ces parties de raccordement 4, 5 sont reliées respectivement à deux pattes de fixation 6, 7 s'étendant parallèlement à la direction longitudinale de la tringle 1 et suivant un plan Q parallèle aux surfaces d'appui 2 du coffret sur lesquelles le support S doit être fixé. Sur ces figures on voit que, conformément à l'invention, la partie intermédiaire 3 recevant le bornier B s'étend suivant un plan P incliné par rapport au plan des pattes de fixation 6, 7 et en conséquence, au plan Q des surfaces d'appui précitées 2. L'axe médian U de la tringle 1 (visible sur la figure 4) est situé à une distance y des surfaces d'appui 2 comprise entre 10 et 40mm. Ces pattes de fixation 6, 7 comprennent des moyens de fixation 8, 9 de la tringle 1 sur les surfaces d'appui 2 du coffret, qui sont constitués dans cette forme particulière de réalisation, par une lumière débouchante 14 et une boutonnière 15, respectivement réalisées dans les deux pattes de fixation 6, 7 et destinées à coopérer avec des vis (non représentées), qui seront avantageusement placées sur les plans d'appui du coffret avant la pose du support S, lors de la fixation du support S dans le coffret . On voit également, en se reportant plus particulièrement à la figure 5A, que ces parties de raccordement (4,5) s'étendent suivant une direction inclinée par rapport au plan R passant par les axes X des moyens de fixation précités (8,9).

Ainsi, la distance (Z) entre les deux plans V,W perpendiculaires aux surfaces d'appui 2, l'un comprenant le bord interne (3e) de la partie intermédiaire (3), et l'autre les bords dits intérieurs (6e) des pattes de fixation (6,7) sera avantageusement égale à la moitié de la largeur 1 de la tringle (1).

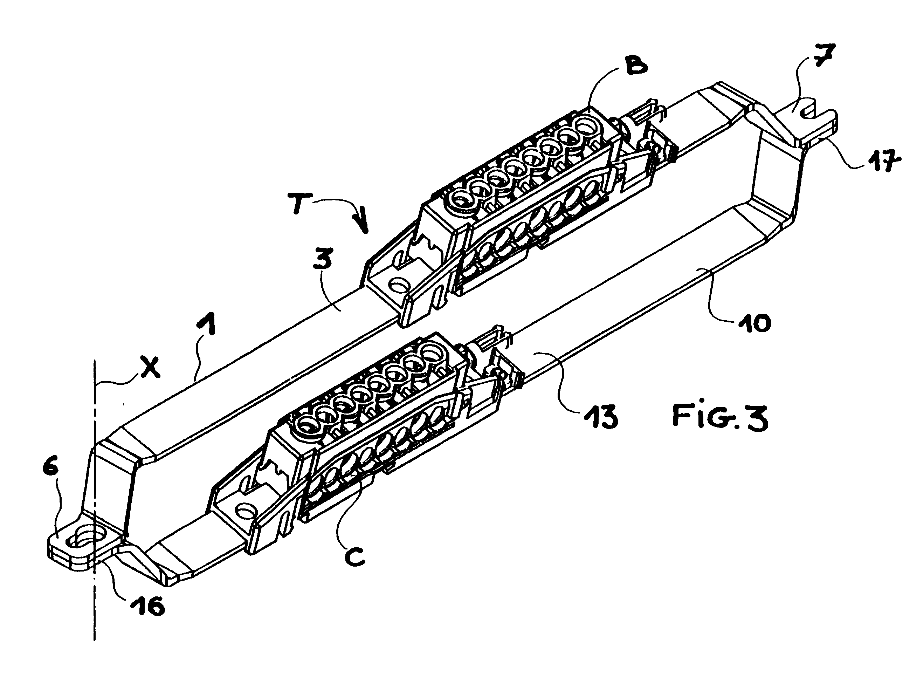

Sur les figures 3, 4, 5 et 5a, on voit un support de borniers T, dit étagé ou à deux étages, constitué par deux tringles 1, 10 telles que décrites précédemment, placées l'une au dessus de l'autre, et en sens inverse, en superposant deux à deux leurs pattes de fixation (6, 16; 7, 17).

Sur ces figures, on voit que les deux tringles 1, 10 ont été réunies de manière que le support T présente deux faces de support 3, 13 parallèles et décalées par rapport au plan R passant par les axes de fixation X. Chaque tringle 1, 10 supporte un bornier B, C, ces deux borniers B, C étant également décalés longitudinalement. On notera qu'on aurait aussi bien pu prévoir une telle superposition avec deux supports inclinés suivant des directions opposées.

En utilisation, cette inclinaison des faces de support 3, 13 par rapport au plan de fixation, accroît la visibilité des têtes de vis (non représentées), et facilite leur serrage. Ainsi, on pourra adapter l'inclinaison des faces de support en fonction de la localisation de ce dernier dans le coffret, (en haut, en bas etc..), grâce à la réversibilité des moyens de fixation.

On notera également que le support pourra être disposé, suivant au moins quatre positions différentes dans lesquelles les borniers seront orientés vers le haut, ou vers le bas du coffret, en étant inclinés d'un côté ou de l'autre du coffret.

Grâce à l'invention, des supports simples ou étagés pourront être fabriqués en usine, avec une même pièce standard en fonction de l'utilisation (différentiation retardée). Il sera également possible à l'électricien sur le site d'installation, même au dernier moment, d'augmenter la capacité des supports, en cas de sous-estimation. En cas d'intervention ultérieure, il pourra réaliser des extensions de raccordement.

On précisera , que ces supports simples ou étagés, pourront être fixés indifféremment avec une grande facilité , dans des coffrets électriques en saillie ou bien encastrés.

## Revendications

1. Support de bornier permettant la fixation d'au moins un bornier dans un coffret électrique ou analogue, du genre constitué par au moins une tringle comprenant une partie intermédiaire sur laquelle est fixé le bornier et, à ses deux extrémités opposées, un moyen de fixation de la tringle sur respectivement deux surfaces d'appui appartenant au coffret, lesdites surfaces s'étendant sensiblement parallèlement à la direction longitudinale de la tringle, caractérisé en ce que la partie intermédiaire précitée (3) de la tringle (1) s'étend suivant un plan P incliné par rapport au plan Q des surfaces d'appui précitées (2) et à une certaine distance y de celui-ci, en étant reliée par ses deux extrémités opposées (3a, 3b), respectivement à deux parties de raccordement (4, 5) respectivement reliées à deux pattes de fixation (6, 7) comportant les moyens de fixation précités (8, 9).

2. Support de bornier selon la revendication 1, caractérisé en ce que les parties de raccordement (4,5) s'étendent suivant une direction inclinée par rapport au plan R passant par les axes X des moyens de fixation précités (8,9) et perpendiculaire aux surfaces d'appui (2) de façon que la partie intermédiaire (3) de la tringle (1) soit décalée latéralement par rapport à ce plan R.

3. Support de bornier selon la revendication 2, caractérisé en ce que la distance (Z) entre les deux plans V,W perpendiculaires aux surfaces d'appui (2), l'un comprenant le bord interne (3e) de la partie intermédiaire précitée (3), et l'autre les bords dits intérieurs (6e) des pattes de fixation (6,7) est environ égale à la moitié de la largeur de la tringle (1).

4. Support de bornier selon l'une quelconque des revendications 1 à 3, caractérisé en ce que la distance y entre l'axe médian U de la tringle (1) et le plan Q des surfaces d'appui est comprise entre 10 et 40 mm.

5. Support de bornier selon l'une quelconque des revendications 1 à 4, caractérisé en ce que l'angle d'inclinaison entre le plan des surfaces d'appui (2) et la partie intermédiaire (3) est compris entre 5 et 30 °.

6. Support de bornier selon l'une quelconque des revendications précédentes, caractérisé en ce que la partie intermédiaire (3), les parties de raccordement (4, 5) et les pattes de fixation (6, 7) précitées sont réalisées par déformation d'une tringle plate.

7. Support de bornier selon l'une quelconque des revendications précédentes, caractérisé en ce que les moyens de fixation précités (8, 9) sont constitués par une lumière débouchante (14) réalisée dans l'une (6) des pattes précitées (6, 7), et une boutonnière (15) réalisée dans l'autre patte de fixation (7) .

8. Support de bornier, caractérisé en ce qu'il comprend deux tringles (1, 10) selon l'une quelconque des revendications 1 à 7, placées l'une au dessus de l'autre et en sens inverse, de façon à superposer leurs pattes de fixation (6, 16; 7, 17) deux à deux, et à former ainsi un support étagé.

## Patentansprüche

1. Klemmenträger, der die Befestigung mindestens einer Klemme in einem elektrischen Schaltkasten o.ä. ermöglicht und entsprechend der Bauart ausgeführt ist, die aus mindestens einer Schiene mit einen Mittelabschnitt, auf dem die Klemme befestigt ist, und je einem an ihren einander gegenüberliegenden Enden angeordneten Mittel zur Befestigung der Schiene auf zwei, jeweils am Schaltkasten ausgebildete zugehörige Auflageflächen besteht, welche genannten Flächen annähernd parallel zur Längsrichtung der Schiene verlaufen, dadurch gekennzeichnet, daß sich der genannte Mittelabschnitt (3) der Schiene (1) in einer, bezüglich der Ebene Q der genannten Auflageflächen (2) geneigten sowie in einem bestimmten Abstand y zu dieser angeordneten Ebene P erstreckt und über seine beiden einander gegenüberliegenden Enden (3a, 3b) jeweils mit zwei zugeordneten Anschlußabschnitten (4, 5) verbunden ist, die ihrerseits mit zugeordneten Befestigungslaschen (6, 7) verbunden sind, welche die genannten Befestigungsmittel (8, 9) umfassen.

2. Klemmenträger nach Anspruch 1, dadurch gekennzeichnet, daß sich die Anschlußabschnitte (4, 5) in einer Ebene erstrecken, die bezüglich der, durch die Achsen X der genannten Befestigungsmittel (8, 9) und senkrecht zu den Auflageflächen (2) verlaufenden Ebene R geneigt ist, so daß der Mittelabschnitt (3) der Schiene (1) seitlich versetzt zu dieser Ebene R angeordnet ist.

3. Klemmenträger nach Anspruch 2, dadurch gekennzeichnet, daß der Abstand (Z) zwischen den beiden senkrecht zu den Auflageflächen (2) stehenden Ebenen V, W, von denen die eine den Innenrand (3e) des genannten Mittelabschnitts (3) und die andere die sogenannten Innenränder (6a) der Befestigungslaschen (6, 7) einschließt, etwa der halben Breite der Schiene (1) entspricht.

4. Klemmenträger nach irgendeinem der Ansprüche 1 bis 3, dadurch gekennzeichnet, daß der Abstand y zwischen der Mittelachse U der Schiene (1) und der Ebene Q der Auflageflächen zwischen 10 und 40 mm beträgt.

5. Klemmenträger nach irgendeinem der Ansprüche 1 bis 4, dadurch gekennzeichnet, daß der Neigungswinkel zwischen der Ebene der Auflageflächen (2) und dem Mittelabschnitt (3) zwischen 5 und 30° beträgt.

6. Klemmenträger nach irgendeinem der vorhergehenden Ansprüche, dadurch gekennzeichnet, daß der Mittelabschnitt (3), die Anschlußabschnitte (4, 5) und die Befestigungslaschen (6, 7) durch Umformen einer Flachschiene gebildet sind.

7. Klemmenträger nach irgendeinem der vorhergehenden Ansprüche, dadurch gekennzeichnet, daß die genannten Befestigungsmittel (8, 9) aus einem, in einer (6) der genannten Laschen (6, 7) ausgebildeten Maul (14) und einem, in der anderen Befestigungslasche (7) ausgebildeten Langloch (15) bestehen.

8. Klemmenträger, dadurch gekennzeichnet, daß er zwei Schienen (1, 10) gemäß irgendeinem der Ansprüche 1 bis 7 umfaßt, die in entgegengesetzter Einbaulage aufeinander montiert sind, derart daß ihre Befestigungslaschen (6, 16; 7, 17) paarweise aufeinander liegen und die Anordnung auf diese Weise einen gestuften Träger bildet.

## Claims

1. A terminal block support enabling at least one terminal block to be fixed in an electrical cabinet or similar, of the kind constituted by at least one rod comprising an intermediate part onto which the terminal block is fixed and, at its two opposite ends, a means for fixing the rod onto respectively two bearing surfaces belonging to the cabinet, said surfaces extending in appreciably parallel manner to the longitudinal direction of the rod, characterized in that the above-mentioned intermediate part (3) of the rod (1) extends in a plane P inclined with respect to the plane Q of the above-mentioned bearing surfaces (2) and at a certain distance y from the latter plane, being joined by its two opposite ends (3a, 3b) respectively to two connecting parts (4, 5) respectively joined to two fixing lugs (6, 7) comprising the above-mentioned fixing means (8, 9).

2. The terminal block support according to claim 1, characterized in that the connecting parts (4, 5) extend in an inclined direction with respect to the plane R passing through the axes X of the above-mentioned fixing means (8, 9) and perpendicular to the bearing surfaces (2) so that the intermediate part (3) of the rod (1) is offset laterally with respect to this plane R.

3. The terminal block support according to claim 2, characterized in that the distance (Z) between the two planes V, W perpendicular to the bearing surfaces (2), one comprising the inside edge (3e) of the above-mentioned intermediate part (3) and the other the edges called the inside edges (6e) of the fixing lugs (6, 7), is about equal to half the width of the rod (1).

4. The terminal block support according to any one of the claims 1 to 3, characterized in that the distance y between the mid-axis U of the rod (1) and the plane Q of the bearing surfaces is comprised between 10 and 40 mm.

5. The terminal block support according to any one of the claims 1 to 4, characterized in that the angle of incline between the plane of the bearing surfaces (2) and the intermediate part (3) is comprised between 5 and 30°.

6. The terminal block support according to any one of the foregoing claims, characterized in that the above-mentioned intermediate part (3), connecting parts (4, 5), and fixing lugs (6, 7) are achieved by deformation of a flat rod.

7. The terminal block support according to any one of the foregoing claims, characterized in that the above-mentioned fixing means (8, 9) are formed by an aperture (14) open at its outside end provided in one (6) of the above-mentioned lugs (6, 7) and a button-hole (15) provided in the other fixing lug (7).

8. A terminal block support, characterized in that it comprises two rods (1, 10) according to any one of the claims 1 to 7, placed one above the other and opposite directions so as to superpose their fixing lugs (6, 16; 7, 17) two by two, thus forming a tiered support.
